# DEMANDE DE BREVET EUROPEEN

(11) **EP 0 625 453 A1**
(43) Date de publication de la demande: **23.11.1994**
(21) Numéro de dépôt: 94107690.3
(22) Date de dépôt: 16.05.1994
(51) Int. Cl.: B60S 1/38, F16B 21/14

(54) **Articulation de palonnier pour dispositif d'essuie-glace**

(30) Priorité: 21.05.1993 FR 9306116
(71) Demandeur: VALEO SYSTEMES D'ESSUYAGE, 78180 Montigny-Le-Bretonneux (FR)
(72) Inventeur: Roumegoux, Jean-Louis, F-75116 Paris (FR)
(74) Mandataire: Gamonal, Didier

(57) **Abrégé**

La présente invention concerne un dispositif d'essuie-glace du type comportant un système de palonnier constitué par un premier élément (1) présentant une section en "U" et un second élément (2) présentant une section en "U" articulés par un axe (15) traversant les alésages (11 à 14) prévus sur les parois latérales desdits éléments (1, 2), l'articulation présentant des moyens pour interdire le déplacement axiale de l'axe (15) par rapport audits éléments (1, 2), caractérisé en ce que l'axe est constitué de deux parties (30, 31) comportant des moyens de verrouillage (18) de l'une avec l'autre.

## Description

La présente invention concerne un dispositif d'essuie-glace du type comportant un système de palonnier constitué par un premier élément présentant une section en "U" et un second élément reçu dans le U du premier élément, lesdits éléments étant articulés par un axe traversant les alésages prévus sur lesdits éléments.

Il est connu dans l'art antérieur de réunir les éléments par un axe riveté. En particulier, le brevet français n° 2.415.563 décrit une articulation mettant en oeuvre un rivet à double tête.

Afin d'éviter l'opération de rivetage, on a proposé dans la demande de brevet WO90/09300 un système d'articulation mettant en oeuvre une pièce de blocage disposée à l'intérieur de l'élément en "U" intérieur. Cette pièce de blocage présente un alésage pour le passage de l'axe. Lorsque l'axe occupe sa position définitive, on provoque une déformation par matage afin d'agrandir localement la section de l'axe pour empêcher les mouvements de translations. Ce mode de réalisation implique toutefois une opération supplémentaire augmentant le prix de revient du dispositif d'essuieglace et présente l'inconvénient de compliquer la fabrication des éléments de l'articulation.

Le but de la présente invention est de remédier à ces inconvénients, et en particulier d'éviter la déformation des pièces lors de la mise en place de l'axe.

L'invention concerne plus particulièrement un dispositif d'essuie-glace caractérisé en ce que l'axe est constitué de deux parties comportant des moyens de verrouillage de l'une avec l'autre.

Le dispositif selon l'invention permet un assemblage sans recours à des outils, et évite de ce fait toute force excessive susceptible de déformer les pièces en "U", comme cela se produit parfois avec les dispositifs prévoyant le matage de l'axe.

Selon une autre caractéristique les moyens de verrouillage consistent en au moins un segment cranté porté par au moins une partie.

Selon une autre caractéristique les parties sont des parties complémentaires introduites en position tête-bêche, chacune des parties présentant au moins :
- une tête dont le diamètre est supérieur au diamètre des alésages,
- un segment cranté,
- la section transversale de chacune des parties complémentaires étant déterminée de façon à ce que leur réunion présente une section sensiblement circulaire.

Selon une autre caractéristique le segment cranté présente des crantages dont les flancs, du côté de la tête, sont sensiblement perpendiculaires à l'axe horizontal et les flancs opposés sont inclinés.

Selon une autre caractéristique les segments crantés des deux parties sont introduits en position tête-bêche dans un manchon tubulaire dont la section intérieure correspond sensiblement à la section des segments crantés réunis.

L'invention concerne notamment un dispositif d'essuie-glace comportant un élément antibruit en matière plastique présentant deux parois latérales munies chacune d'un alésage et d'une couronne annulaire coaxiales s'étendant perpendiculairement à la surface extérieure de ladite paroi, le diamètre extérieur de la couronne annulaire étant sensiblement égale au diamètre de l'alésage de l'élément en "U" extérieur, le diamètre de la tête des parties complémentaires étant supérieur au diamètre intérieur de la couronne annulaire, le diamètre du segment cylindrique étant sensiblement égale au diamètre intérieur de la couronne annulaire.

Selon une variante, l'élément antibruit en matière plastique présente deux parois latérales munies chacune d'un alésage et d'une couronne annulaire coaxiales s'étendant perpendiculairement à la surface intérieure de ladite paroi, le diamètre extérieur de la couronne annulaire étant sensiblement égale au diamètre de l'alésage de l'élément en "U" intérieur.

Selon une autre variante, l'élément antibruit en matière plastique présente deux parois latérales munies chacune d'un alésage et d'une couronne annulaire coaxiales s'étendant perpendiculairement de part et d'autre de ladite paroi, le diamètre extérieur de la couronne annulaire étant sensiblement égale au diamètre de l'alésage de l'élément en "U" correspondant, le diamètre de la tête des parties complémentaires étant supérieur au diamètre intérieur de la couronne annulaire, le diamètre du segment cylindrique étant sensiblement égale au diamètre intérieur de a couronne annulaire.

Selon un premier mode de mise en oeuvre, chacune des parties complémentaires présente un segment cranté, constitué par une demi-tige cylindrique, les crantages étant prévus sur la surface plane passant par l'axe longitudinal.

Selon un deuxième mode de mise en oeuvre, l'une des parties complémentaires présente un segment cranté, constitué par une lame délimitée par deux plans parallèles à un plan passant par l'axe longitudinal, l'autre partie complémentaire, présentant un segment cranté constitué par une tige cylindrique privée d'une partie centrale complémentaire de la lame crantée de la première partie, délimitée deux plans parallèles à un plan passant par l'axe longitudinal.

Selon un troisième mode de mise en oeuvre, chacune des parties complémentaires présente un segment cranté constitué par deux secteurs de tige tubulaire délimités par deux plans passant par l'axe longitudinal.

Avantageusement, chacune des parties complémentaires présente un segment cranté constitué par deux secteurs de tige tubulaire délimités par deux plans perpendiculaires passant par l'axe longitudinal.

Selon une variante, la longueur du segment intermédiaire est inférieure à la longueur de l'alésage traversé.

Selon une autre variante, le dispositif comporte en outre une pièce tubulaire d'un diamètre intérieur au moins égale au diamètre extérieur des segments crantés, et d'une longueur égale à la distance entre les faces intérieures de la pièce en "U" intérieure.

L'invention sera mieux comprise à la lecture de la description qui suit, faisant référence aux dessins annexés où:
- la figure 1 représente une vue en coupe d'une première variante de l'invention ;
- la figure 2 représente une vue en coupe longitudinale d'un premier exemple de réalisation de l'axe cranté selon le dispositif de la figure 1 ;
- la figure 3 représente une vue en coupe transversale partielle du premier exemple de réalisation de l'axe cranté selon l'axe III-III de la figure 1;
- la figure 4 représente une vue longitudinale d'un second exemple de réalisation de l'axe cranté ;
- la figure 5 représente une vue en coupe transversale du second exemple de réalisation de l'axe cranté ;
- la figure 6 représente une vue en coupe transversale d'un troisième exemple de réalisation de l'axe cranté ;
- la figure 7 représente une vue en coupe d'une seconde variante du dispositif.

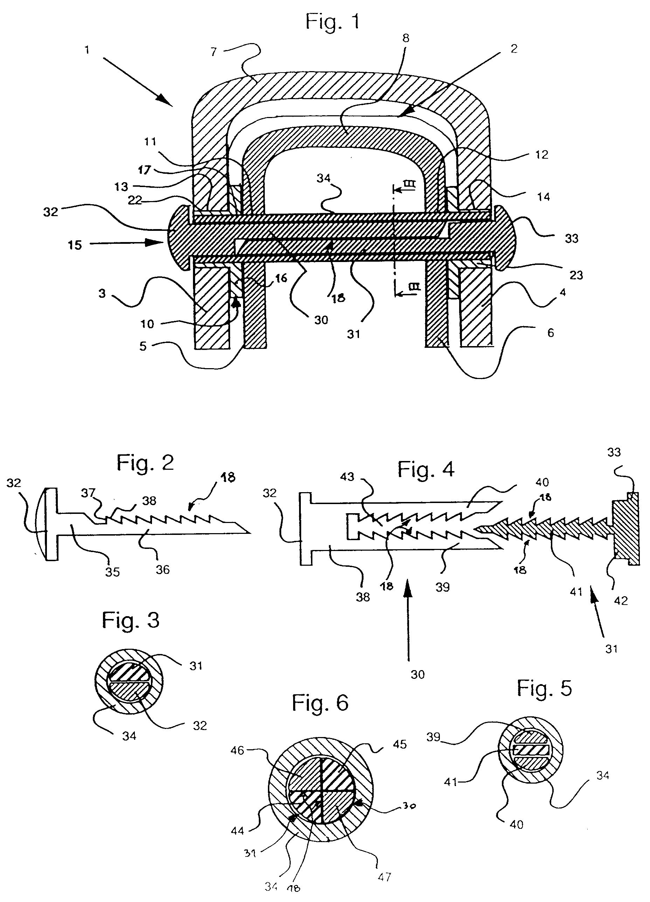

La figure 1 représente une articulation entre une extrémité de l'étrier primaire 1 d'un dispositif d'essuie-glace, et de l'étrier secondaire 2, présentant chacun une section en forme de "U", avec deux parois latérales respectivement 3, 4 et 5, 6 réunies par une paroi incurvée respectivement 7, 8 formant un angle d'environ 90 ° par rapport aux parois latérales. Les dimensions de l'étrier secondaire 2 sont telles qu'il se loge à l'intérieur de l'étrier principal 1. Une pièce en matière plastique 10, dite pièce anti-bruit, est disposée entre les deux étriers 1, 2 de façon à réduire les frottements de type métal contre métal, et à réduire le bruit de fonctionnement.

Les parois latérales 3, 4 de l'étrier principal 1 et les parois latérales 5, 6 de l'étrier secondaire 2 présentent des alésages respectivement 11, 12, 13, 14 alignés lorsque les deux étriers 1, 2 sont assemblés.

Cette pièce en matière plastique présente deux parois latérales 16 munies d'alésages 17 prolongés par des couronnes annulaires 22, 23 coaxiales. Le diamètre extérieur des couronnes annulaires 22, 23 est sensiblement égale au diamètre des alésages 13, 14 prévus sur les parois latérales de l'étrier 1 en "U".

Dans ce cas, le diamètre des alésages 13,14 est supérieur au diamètre des alésages 11,12 tout en étant égal au diamètre extérieur des couronnes 21,22, le diamètre intérieur desdites couronnes étant sensiblement égal au diamètre des alésages 11,12 de l'étrier 2, tout en étant coaxiaux.

C'est à travers ces alésages 11,12,22,23 qu'est disposé un manchon tubulaire 34 portant dans sa partie centrale un axe 15 de manière à assurer la liaison articulée entre les étriers 1,2.

L'axe 15 est constitué de deux parties complémentaires 30,31 en position tête-bêche. Chacune des parties complémentaires 30, 31 présente une tête 32, 33 d'un diamètre supérieur aux alésages prévus sur les pièces en "U" et/ou sur la pièce antibruit et comporter des moyens de verrouillage empêchant l'une des parties de se détacher de l'autre des parties lorsque ces deux parties sont assemblées selon l'exemple de réalisation de la figure 1.

Les figures 2 à 6 représentent différentes variantes de réalisation des parties complémentaires 30, 31.

Les figures 2 et 3 représentent une vue respectivement en coupe longitudinale et en coupe transversale d'une première variante, selon laquelle chacune des parties complémentaires 30, 31 est de forme identique.

La partie complémentaire, réalisée en matière plastique, présente une tête 32, un segment cylindrique 35 et une lame 36 présentant un segment cranté 18. La lame crantée 36 présente la forme d'un demi-cylindre Elle présente à sa surface supérieure des crantages dont les flancs arrières 37, considérés en regard de la tête 32, sont délimités par un plan perpendiculaire à l'axe longitudinal de la partie complémentaire 31. Les flancs avant 38 opposés aux flancs 37 sont inclinés de façon à permettre l'emboîtement de la partie complémentaire de la lame crantée de la partie opposée. Les flancs avant 38 forment avec un plan perpendiculaire à l'axe longitudinal de la partie complémentaire un angle compris entre 30 et 45 degrés.

L'élasticité du matériau permet l'engagement des segments crantés des deux parties complémentaires 31, 32 lors de leur introduction dans le manchon tubulaire 34, qui se fait par engagement de chaque partie 30,31 dans le manchon tubulaire de telle sorte que, par exemple, la partie 30 soit engagée par la gauche en considérant la figure 2 et la partie 31 soit engagée par la droite jusqu'à ce que les têtes 32,33 viennent buter sur les parois 3,4 de l'étrier 1 ou sur les extrémités du manchon 34 si celui-ci a une dimension axiale plus grande que la distance entre les deux parois 3,4.

La forme des crantages, et la section intérieure du manchon tubulaire 34 sensiblement identique à la section extérieure des deux lames crantées réunies, interdit le désengagement des parties complémentaires 31, 32.

Les figures 4 et 5 représentent une vue respectivement en coupe longitudinale et en coupe transversale d'une deuxième variante. La première partie complémentaire 30 présente une tête 32 prolongée par un segment cylindrique 38, lui-même prolongé par deux lames crantées 39, 40. Ces lames crantées 39, 40 s'étendent de part et d'autre d'un évidement central 43. Chacune des lames crantées 39, 40 est délimitée par une surface crantée dont l'enveloppe est constituée par un plan parallèle au plan contenant l'axe longitudinal de la partie 31.

La deuxième partie 31 présente une tête 33 prolongée par un segment cylindrique 42, et par une lame 41 crantée sur ses deux faces opposées.

L'épaisseur de cette lame 41 est au plus égale à celle de l'évidement central 43 de la première partie complémentaire 30.

La figure 5 représente les deux parties complémentaires 30, 31 selon cette deuxième variante, en position dans le manchon tubulaire 34.

La figure 6 représente une troisième variante dans laquelle les deux parties complémentaires 30, 31 sont identiques, comme dans le cas de la première variante.

Dans cette variante chacune des parties présente deux secteurs cylindriques 44, 45 ou 46, 47. Ces secteurs cylindriques présentent la forme de quart de cylindre, présentant des surfaces planes crantées 18 sur les parties planes délimitant le quart de cercle.

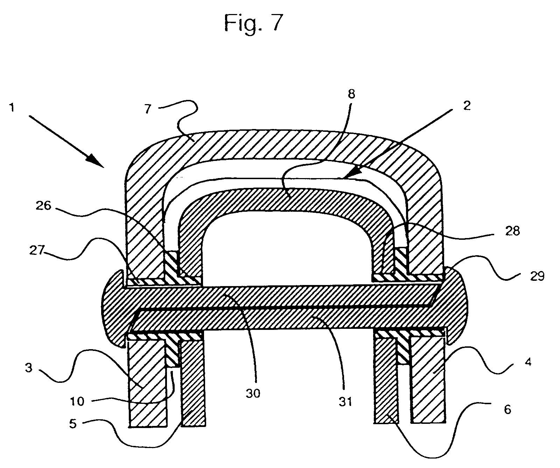

La figure 7 représente une variante de réalisation dans laquelle la pièce antibruit comporte deux parois présentant de part et d'autre des couronnes annulaires 26, 27, 28, 29.

Les couronnes annulaires assurent l'engagement des surfaces crantées des parties complémentaires 30, 31, et évitent ainsi l'emploi d'un manchon tubulaire.

Pour éviter également l'emploi d'un manchon tubulaire, il peut être prévu, à partir de la figure 2, soit d'utiliser un étrier secondaire 2, de section pleine au niveau de l'axe d'articulation, ce qui se fait généralement avec un étrier secondaire en matière plastique, soit de prévoir des collets saillants intérieurement l'un vers l'autre, à partir des alésages 11,12 de l'étrier secondaire, ces collets étant monoblocs avec l'étrier secondaire 2.

L'invention est décrite dans ce qui précède à titre d'exemple non limitatif. Il est bien entendu que l'Homme de Métier sera à même de proposer des variantes sans pour autant sortir du cadre de l'invention.

## Revendications

1. Dispositif d'essuie-glace du type comportant un système de palonnier constitué par un premier élément (1) présentant une section en "U" et un second élément (2) reçu dans le "U" du premier élément en étant articulés par un axe (15) traversant les alésages (11 à 14) prévus sur lesdits éléments (1, 2), l'articulation présentant des moyens pour interdire le déplacement axiale de l'axe (15) par rapport audits éléments (1, 2), caractérisé en ce que l'axe est constitué de deux parties (30, 31) comportant des moyens de verrouillage (18) de l'une avec l'autre.

2. Dispositif d'essuie-glace selon la revendication 1, caractérisé en ce que les moyens de verrouillage consistent en au moins un segment cranté (18) porté par au moins une partie (30, 31).

3. Dispositif d'essuie-glace selon la revendication 1 ou 2, caractérisé en ce que les parties (30, 31) sont des parties complémentaires introduites en position tête-bêche, chacune des parties présentant au moins :
- une tête dont le diamètre est supérieur au diamètre L des alésages (11 à 14),
- un segment cranté,
- la section transversale de chacune des parties complémentaires étant déterminée de façon à ce que leur réunion présente une section sensiblement circulaire.

4. Dispositif d'essuie-glace selon l'une des revendications précédentes, caractérisé en ce que le segment cranté (18) présente des crantages dont les flancs (37), du côté de la tête, sont sensiblement perpendiculaires à l'axe horizontal et les flancs opposés (38) sont inclinés.

5. Dispositif d'essuie-glace selon l'une des revendications précédentes, caractérisé en ce que les segments crantés des deux parties (30, 31) sont introduits en position tête-bêche dans un manchon tubulaire (34) dont la section intérieure correspond sensiblement à la section des segments crantés réunis.

6. Dispositif d'essuie-glace selon l'une quelconque des revendications précédentes caractérisé en ce qu'il comporte en outre un élément antibruit (10) en matière plastique présentant deux parois latérales (16) munies chacune d'un alésage (17) et d'une couronne annulaire (22, 23 ; 27, 29) coaxiale, le diamètre extérieur de la couronne annulaire (22, 23, 27, 29) étant sensiblement égal au diamètre de l'alésage (13, 14) de l'élément extérieur (1), le diamètre de la tête (34, 33) des parties (30, 31) étant supérieur au diamètre intérieur de la couronne annulaire (22, 23, 27, 29) et le diamètre intérieur de ladite couronne annulaire étant sensiblement identique au diamètre extérieur des segments crantés des parties complémentaires (30, 31).

7. Dispositif d'essuie-glace selon l'une quelconque des revendications 1 à 6, caractérisé en ce que l'élément antibruit (10) en matière plastique présentant deux parois latérales munies chacune d'un alésage (17) et d'une couronne annulaire intérieure (26, 28) coaxiale à une couronne annulaire extérieure (27,29), le diamètre extérieur de la couronne annulaire intérieure (26, 28) étant sensiblement égal au diamètre de l'alésage de l'élément intérieur (2) et le diamètre intérieur de ladite couronne annulaire intérieure étant sensiblement identique au diamètre extérieur des segments crantés des parties (30, 31).

8. Dispositif d'essuie-glace selon l'une quelconque des revendications 1 à 7, caractérisé en ce que l'élément antibruit (10) en matière plastique présente deux parois latérales munies chacune d'un alésage et d'une couronne annulaire (26, 27, 28, 29) coaxiales s'étendant perpendiculairement de part et d'autre de ladite paroi, le diamètre extérieur de la couronne annulaire étant sensiblement égale au diamètre de l'alésage de l'élément en "U" correspondant, le diamètre de la tête (32, 33) des parties complémentaires (30, 31) étant supérieur au diamètre intérieur de la couronne annulaire (22, 23, 27, 29), et le diamètre intérieur de ladite couronne annulaire étant sensiblement identique au diamètre extérieur des segments crantés des parties complémentaires (30, 31).

9. Dispositif d'essuie-glace selon l'une quelconque des revendications précédentes, caractérisé en ce que chacune des parties complémentaires (30, 31) présente un segment cranté (18) constitué par une demitige cylindrique (36), les crantages étant prévus sur la surface plane passant par l'axe longitudinal.

10. Dispositif d'essuie-glace selon l'une quelconque des revendications 1 à 8, caractérisé en ce que l'une des parties complémentaires (31) présente un segment cranté (18) constitué par une lame (41) délimitée par deux plans parallèles à un plan passant par l'axe longitudinal, l'autre partie complémentaire (30) présentant deux segments crantés (39, 40) constitués par une tige cylindrique munie d'un évidement central (43) complémentaire de la lame crantée (41) de l'autre partie (31), délimitée deux plans parallèles à un plan passant par l'axe longitudinal.

11. Dispositif d'essuie-glace selon l'une quelconque des revendications 1 à 8, caractérisé en ce que chacune des parties complémentaires (30, 31) présente un segment cranté constitué par deux secteurs (44, 45 ; 46, 47) de tige tubulaire, délimités par deux plans passant par l'axe longitudinal.

12. Dispositif d'essuie-glace selon la revendication 11, caractérisé en ce que chacune des parties complémentaires (30, 31) présente un segment cranté constitué par deux secteurs (44, 45 ; 46, 47) de tige tubulaire délimités par deux plans perpendiculaires passant par l'axe longitudinal.
